# EUROPÄISCHE PATENTSCHRIFT

(11) **EP 3 998 142 B1**
(45) Veröffentlichungstag und Bekanntmachung des Hinweises auf die Patenterteilung: **27.11.2024**
(21) Anmeldenummer: 21203631.3
(22) Anmeldetag: 20.10.2021
(51) Int. Cl.: B25J 15/06, B25J 19/02

(54) **GREIFSYSTEM UND ANBAUMODUL MIT HUB- UND BELEGUNGSERKENNUNG**
GRIPPING SYSTEM AND ADD-ON MODULE WITH LIFTING AND OCCUPANCY DETECTION
SYSTÈME DE PRÉHENSION ET MODULE D'ASSEMBLAGE À DÉTECTION DE COURSE ET D'OCCUPATION

(30) Priorität: 27.10.2020 DE 102020128241
(43) Veröffentlichungstag der Anmeldung: 18.05.2022
(73) Patentinhaber: J. Schmalz GmbH, 72293 Glatten (DE)
(72) Erfinder: Schaaf, Walter, 72250 Freudenstadt-Grüntal (DE); Kern, Benjamin, 72224 Ebhausen (DE)
(74) Vertreter: DREISS Patentanwälte PartG mbB

(56) Entgegenhaltungen:
- DE-A1- 102015 009 998
- FR-A1- 3 005 887
- US-A1- 2017 057 091

## Beschreibung

Die Erfindung betrifft ein Greifsystem zum Ansaugen und Handhaben von Objekten und ein Anbaumodul zum Nachrüsten eines bestehenden Greifsystems durch Anordnen an ein bestehendes Greifsystem.

Das Greifsystem umfasst ein Grundmodul, in welchem eine mit Unterdruck beaufschlagbare Unterdruckkammer vorgesehen ist, und mit einem am Grundmodul angeordneten Sauggreifer zum Ansaugen und Handhaben von Objekten, wobei das Grundmodul auf einer Saugseite wenigstens eine Saugöffnung aufweist, wobei der Saugseite elastisch komprimierbare, mit den Saugöffnungen korrespondierende, Saugräume aufweisende Saugnäpfe mit einer Anlagefläche zur Anlage des anzusaugenden Objekts oder der anzusaugenden Objekte zugeordnet sind, wobei sich die Saugräume jeweils entlang einer senkrecht zur Anlagefläche orientierten Saugachse erstrecken, wobei im Betrieb, in welchem an der Anlagefläche keine Objekte angesaugt gehalten sind, die Saugnäpfe einen Neutralzustand einnehmen, und wobei im Betrieb, in welchem an der Anlagefläche ein Objekt angesaugt gehalten ist, die Saugnäpfe einen Komprimierzustand einnehmen, wobei am oder im Grundmodul wenigstens ein Sensor und am oder im wenigstens einem Saugnapf wenigstens ein Sensorelement vorgesehen sind. Das Sensorelement kann insbesondere passiv oder aktiv ausgebildet sein, indem es z.B. ein physikalisches Feld erzeugt und/oder beeinflusst. Der Saugnapf kann insbesondere als Faltenbalg oder als Saugglocke bzw. als Flachsauger ausgebildet sein.

Derartige Greifsysteme dienen insbesondere zum lageweisen Ergreifen und Anheben sowie zum Halten und Fixieren von Objekten, die unregelmäßige und komplexe Oberflächen aufweisen, insbesondere lagestabile Flachmaterialien, wie z.B. Bretter oder Platten, oder kleinere Gegenstände, wie z.B. Dosen, Becher, Schalen oder dergleichen. Das Greifsystem weist dabei wenigstens einen flexiblen Saugnapf auf, der üblicherweise an die Oberseite der zu greifenden Gegenstände angelegt wird und sich an die mitunter unebene Oberfläche gut anschmiegt. Im Betrieb des Greifsystems ist eine sichere, bedarfsgerechte und präzise Ansteuerung wichtig.

Aus der EP3290167A1 ist eine Handhabungsvorrichtung mit einem Saugnapf, einer ersten und einer zweiten Sensorkomponente bekannt, wobei eine Verlagerung und/oder eine Verformung des Saugnapfs durch eine relative Verlagerung der Sensorkomponenten detektierbar ist.

Aus der FR 3 005 887 A1 und der DE 10 2015 009998 A1 sind Greifsysteme mit Merkmalen des Oberbegriffs des Anspruchs 1 bekannt. Aus der US 2017/057091 A1 ist außerdem ein Greifsystem mit einer Auswerteeinheit nach Anspruch 1 und einem externem Verformungssensor bekannt.

Der vorliegenden Erfindung liegt die Aufgabe zugrunde, ein Greifsystem bereitzustellen, mit dem der Greifvorgang funktionssicher erfolgt und überwachbar ist.

Diese Aufgabe wird gelöst durch ein Greifsystem mit den Merkmalen des Patentanspruchs 1. Folglich ist vorgesehen, dass das wenigstens eine Sensorelement an einem im Saugraum angeordneten Einleger angeordnet ist oder von diesem Einleger gebildet ist. Ferner ist vorgesehen, dass der wenigstens eine Sensor und das wenigstens eine Sensorelement derart zusammenwirken und eingerichtet sind, dass durch Verlagerung des wenigstens einen Sensorelements und zumindest bei Erreichen eines vorgegebenen oder vorgebbaren Komprimierzustands durch den Sauggreifer von dem wenigstens einen Sensor Sensorsignale erzeugt werden. Das wenigstens eine Sensorelement ist derart mit dem Saugnapf gekoppelt, dass bei einer Hubbewegung des Saugnapfes zwischen dem Neutralzustand und dem Komprimierzustand der Sensorelement diese Hubbewegung zumindest teilweise mitmacht. Entsprechend folgt das wenigstens eine Sensorelement dem Saugnapf bei einer Kippbewegung, welche durch das Aufliegen des Saugnapfes am Rand eines Objekt resultiert. Das Sensorelement ändert dabei seine Orientierung. Dies erfolgt durch die Kopplung des Einlegers mit dem Saugnapf. Folglich kann zum einen ermittelt werden, ob ein Saugnapf durch ein gegriffenes Objekt belegt ist, und zum andern ermittelt werden, inwieweit eine Hubbewegung und/oder Kippbewegung beim Greifen eines Objekts erfolgt. Insbesondere die zweite Funktion kann zur Verschleißerkennung des Saugnapfes und/oder zur Detektion des Abrutschens eines oder mehrere Objekte genutzt werden, wenn beispielsweise der Saugnapf das Objekt aufgrund einer unzureichenden Stärke des Unterdrucks nur teilweise angesaugt hat und/oder der Saugnapf bzw. die Anlagefläche nur teilweise anliegt bzw. belegt ist.

Durch die Anordnung des Sensorelements an dem Einleger oder Bildung des Sensorelements durch den Einleger erfüllt der Einleger eine Doppelfunktion. Zum einen ist der Einleger Teil der Hub- und Belegungsdetektion und zum anderen verhindert der Einleger das übermäßige Durchbiegen auch sehr dünnwandiger angesaugter Objekte in den Saugraum hinein. Zudem ist vorteilhaft, dass der Einleger die Hubbewegung des Saugnapfs mitmacht, sodass keine zusätzliche Kraft auf das zu greifende Objekt beim Abstützen ausgeübt wird.

Der Sensor und das Sensorelement können derart miteinander zusammenwirken und können derart eingerichtet sein, dass der Abstand zwischen dem Sensor und dem Sensorelement erfasst wird und bei Über- oder Unterschreiten eines Schwellwerts ein Signal ausgegeben wird. Der Abstand zwischen dem Sensor und dem Sensorelement ändert sich durch die Hubbewegung des Saugnapfs. Bei einer Hubbewegung des Saugnapfs wird auch das Sensorelement relativ zum Sensor verlagert, wobei der Sensor durch die Hubbewegung nicht verlagert wird.

Vorteilhafterweise weist der Einleger eine senkrecht zur Saugachse ausgebildete Einlegerplatte und wenigstens eine in der Einlegerplatte vorgesehene Ausnehmung auf, in der das wenigstens eine Sensorelement angeordnet ist. Die Einlegerplatte kann dabei eine senkrecht zur Saugachse ausgebildete Einlegerfläche aufweisen, welche zum zu greifenden Objekt gerichtet ist, sodass ein optimales Abstützen des zu greifenden Objekts bezüglich des Saugraums sichergestellt ist.

Eine vorteilhafte Weiterbildung sieht vor, dass die Ausnehmung im Bereich der Saugachse vorgesehen ist. Dies ist insbesondere beim Vorsehen eines einzigen Sensorelements vorteilhaft, sodass der Komprimierzustand unabhängig von einem Verkippen des Einlegers detektiert werden kann.

Ferner kann der Einleger im Wesentlichen den gesamten Querschnitt des Saugraums ausfüllen, wodurch das Abstützen des zu greifenden Objekts bezüglich des Saugraums optimiert wird. Zudem kann der Einleger eine luftdurchlässige Struktur umfassen, welche insbesondere durch ein poröses Material und/oder wenigstens einen Luftdurchlasskanal gebildet wird.

Vorteilhafterweise umfasst der Einleger wenigstens einen an der Einlegerplatte angeordneten und zum Sensor gerichteten Einlegerstößel mit einem ebenfalls zum Sensor gerichteten freien Stößelende. Das wenigstens eine Sensorelement kann durch den Einlegerstößel oder durch das freie Stößelende gebildet werden oder am Einlegerstößel, vorzugsweise am freien Stößelende, vorgesehen sein. Somit kann der Abstand zwischen dem wenigstens ein Sensor und dem wenigstens ein Sensorelement verringert werden, sodass eine höhere Sensibilität hinsichtlich einer relativen Verlagerung zwischen dem Sensorelement und dem Sensor erzielt werden kann.

Eine vorteilhafte Ausgestaltung sieht vor, dass sich der wenigstens eine Einlegerstößel parallel zur Saugachse erstreckt. Ferner ist vorteilhaft, wenn am Einleger und/oder am Grundmodul ein Hubbegrenzungsanschlag zur Begrenzung der Hubbewegung des Saugnapfs und des Einlegers vorgesehen ist.

Zudem ist vorteilhaft, wenn mehrere, einander gegenüberliegende Einlegerstößel vorgesehen sind, sodass beispielsweise ein Verkippen des Saugnapfs detektiert werden kann.

Ferner ist vorteilhaft, wenn das wenigstens eine Sensorelement einen Magneten, ein ferromagnetisches Metall und/oder ein durch den wenigstens einen Sensor detektierbares Material umfasst.

Ferner ist vorteilhaft, wenn der wenigstens eine Sensor als kapazitiver Sensor, als induktiver Sensor, als optischer Sensor und/oder als Magnetfeldsensor, insbesondere als Hall-Sensor ausgebildet ist, und/oder wenn der wenigstens eine Sensor und das wenigstens eine Sensorelement als Fotounterbrecher und/oder als galvanischer Kontakt ausgebildet sind. Die Ausbildung des Sensors als Hall-Sensor, kapazitiv, induktiv oder optisch erlaubt eine höhere Flexibilität, da ein Abstand zwischen dem Sensor und dem Sensorelement vorliegen kann und eine kontinuierliche Abstandsmessung zwischen dem Sensor und dem Sensorelement möglich ist. Die Ausbildung des Sensors zu einem Fotounterbrecher oder einem galvanischer Kontakt erfordert zur Signalerzeugung eine Verlagerung des Sensorelements in den unmittelbaren Bereich des Sensors, wobei hierbei eine höhere Genauigkeit bei der Detektion der Schwellwertüberschreitung sichergestellt ist. Jedoch ist mit diesen Sensorprinzipien nur eine Schwellwertüberschreitung detektierbar und keine kontinuierliche Messung möglich.

Für den Fall, dass nur ein Sensorelement und ein Sensor vorgesehen sind, und dass der Sensor bspw. als einachsig wirkender Sensor, insbesondere als einachsiger Magnetfeldsensor, ausgebildet ist, kann der Abstand zwischen dem Sensor und dem Sensorelement detektiert werden. Folglich dient eine derartige Ausführungsform zur Detektion der Hubbewegung des Saugnapfs. Eine Weiterentwicklung sieht die Ausbildung des Sensors bspw. als dreiachsig wirkender Sensor, insbesondere als dreiachsiger Magnetfeldsensor vor, wobei beim Vorsehen nur eines Sensors und eines Sensorelements, zusätzlich zur Lageänderung entlang der Saugachse die Lageänderung senkrecht zur Saugachse detektierbar ist. Folglich kann sowohl eine Hubbewegung als auch eine Kippbewegung des Saugnapfs mit einem Sensor detektiert werden. Alternativ können eine Hubbewegung und eine Kippbewegung mit mehreren einachsig entlang der Saugachse wirkenden Sensoren, insbesondere einachsigen Magnetfeldsensoren, detektiert werden. Bei einer Kippbewegung kann das Sensorelement senkrecht zur Saugachse verlagert werden und/oder seine Orientierung relativ zur Saugachse ändern.

Es ist eine die Sensorsignale auswertende Auswerteeinheit vorgesehen, die dazu eingerichtet ist, aus den Sensorsignalen verschiedene Größen zu bestimmen. Zu diesen Größen können insbesondere die Saugnäpfe, die den Komprimierzustand einnehmen oder die den Komprimierzustand nicht einnehmen, gehören. Dadurch kann nach dem Greifen festgestellt werden, welche Teilabschnitte der Ansaugfläche ein Objekt greifen und welche kein Objekt greifen. Ferner ist vorteilhaft, wenn die Auswerteeinheit den Belegungsgrad der Saugnäpfe bestimmt. Zudem ist denkbar, dass die Auswerteeinheit die Komprimiertiefe beim Ansaugen von Objekten bestimmt, also wie sicher das angesaugte Objekt gegriffen ist. Ist die Komprimiertiefe sehr gering, ist denkbar, dass der Gegenstand nicht wie vorgesehen angesaugt ist. Zudem ist denkbar, dass die Auswerteeinheit derart eingerichtet ist, dass die Verlagerung des Sensorelements bestimmbar ist. Die Verlagerung des Sensorelements sieht sowohl die Lageänderung entlang der Saugachse als auch senkrecht zur Saugachse vor. Zudem ist vorteilhaft, wenn die Orientierungsänderung des Sensorelements, insbesondere dessen Winkel zur Saugachse, detektierbar ist. Ferner ist vorteilhaft, wenn die Veränderung der Komprimiertiefe bzw. des Komprimierzustands während der Handhabung bestimmt wird. Der Komprimierzustand kann sich insbesondere aufgrund von Gewichtskräften oder Trägheitskräften während des Bewegens des Greifsystems ändern. Sollte der Komprimierzustand während des Greifvorgangs und der Handhabung einen kritischen Schwellwert unterschreiten, dann kann ein Lösen des Gegenstands von der Anlagefläche nicht ausgeschlossen werden. Die Auswerteeinheit kann dann entsprechende Gegenmaßnahmen treffen, beispielsweise der Ansaugdruck erhöhen, die gegriffenen Objekte ablegen oder entsprechende geeignete Maßnahmen veranlassen. Zudem kann die Auswerteeinheit die Anzahl der Komprimierzustände in einem vorgegebenen Zeitraum bestimmen. Denkbar ist, dass über die Anzahl der Komprimierzustände auf die Alterung der Saugnäpfe rückgeschlossen werden kann, so dass die Saugnäpfe rechtzeitig ausgetauscht werden können. Die Auswerteeinheit kann dabei im oder am Greifsystem vorgesehen sein. Allerdings ist auch denkbar, dass die Auswerteeinheit extern vorgesehen ist, und insbesondere mit einer übergeordneten Maschinensteuerung gekoppelt ist.

Die der Erfindung zugrundeliegenden Aufgabe wird ebenfalls durch das Anbaumodul zum Anordnen zwischen einem Grundmodul und einem Sauggreifer eines Greifsystems mit den Merkmalen des Patentanspruchs 8 gelöst. Folglich ist wenigstens ein Sensor im Anbaumodul angeordnet. Der wenigstens eine Sensor ist derart eingerichtet und wirkt mit wenigstens einem im Saugnapf vorgesehenen Sensorelement zusammen, dass durch Verlagerung des wenigstens einen Sensorelements und zumindest bei Erreichen eines vorgegebenen oder vorgebbaren Komprimierzustands von dem wenigstens einen Sensor Sensorsignale erzeugt werden. Der Vorteil des Anbaumoduls ergibt sich dadurch, dass ein bestehendes Greifsystem ohne Hub- oder Belegungsdetektion durch das Anbaumodul in diesen Funktionen erweitert werden kann.

Weitere Einzelheiten und vorteilhafte Ausgestaltung der Erfindung sind der nachfolgenden Beschreibung zu entnehmen, anhand der verschiedenen Ausführungsbeispiele näher beschrieben und erläutert sind.

Es zeigen:
- Fig. 1: eine schematische Darstellung eines erfindungsgemäßen Greifsystems mit Sensoren innerhalb des Grundmoduls;
- Fig. 2: eine schematische Darstellung eines erfindungsgemäßen Greifsystems mit einem Sensoren umfassenden Anbaumodul zwischen dem Grundmodul und den Saugnäpfen;
- Fig. 3: eine schematische Darstellung eines Anbaumoduls zum Anordnen an ein Greifsystem mit einem in einem Saugnapf angeordneten Einleger, einem Sensor und einem an dem Einleger angeordneten Sensorelement;
- Fig. 4: eine schematische Darstellung eines Anbaumoduls mit einem in einem Saugnapf angeordneten Einleger, mit einem Sensor und mit einem an dem Einleger angeordneten und den Sensorelement bildenden Einlegerstößel;
- Fig. 5A: eine Schnittdarstellung eines Anbaumoduls gemäß Fig. 3 im Neutralzustand;
- Fig. 5B: eine Schnittdarstellung eines Anbaumoduls gemäß Fig. 3 im Komprimierungszustand;
- Fig. 5C: Verlauf des Sensorsignals in Abhängigkeit des Abstands zwischen Sensor und Sensorelement bei einem Anbaumodul gemäß Fig. 3;
- Fig. 6: eine Schnittdarstellung eines Anbaumoduls mit einem in einem Saugnapf angeordneten Einleger, mit einem Sensor, mit einem an dem Einleger angeordneten Einlegerstößel und mit einem am Einlegerstößel angeordneten Sensorelement;
- Fig. 7A: eine Schnittdarstellung eines Anbaumoduls gemäß Fig. 6 im Neutralzustand;
- Fig. 7B: eine Schnittdarstellung eines Anbaumoduls gemäß Fig. 6 im Komprimierungszustand;
- Fig. 7C: Verlauf des Sensorsignals in Abhängigkeit des Abstands zwischen Sensor und Sensorelement bei einem Anbaumodul gemäß Fig. 6;
- Fig. 8: eine Schnittdarstellung eines Anbaumoduls mit einem in einem Saugnapf angeordneten Einleger, mit einem Sensor, mit einem an dem Einleger angeordneten Einlegerstößel und mit einem am Einlegerstößel angeordneten Sensorelement, wobei der Sensor als Fotounterbrecher ausgebildet ist;
- Fig. 9A: eine Schnittdarstellung eines Anbaumoduls mit einem außerhalb des Saugnapfs angeordneten Ausleger, mit vier Sensoren, mit vier am Ausleger angeordneten Sensorelementen;
- Fig. 9B: eine schematische Seitenansicht eines Saugnapfs gemäß Fig. 9A mit vier Auslegernasen;
- Fig. 10A: eine Schnittdarstellung eines Anbaumoduls mit einem außerhalb des Saugnapfs angeordneten und vier Auslegerstößel umfassenden Ausleger, mit vier Sensoren, mit vier am Ausleger angeordneten Sensorelementen;
- Fig. 10B: eine schematische Seitenansicht eines Saugnapfs gemäß Fig. 10A mit einem Auslegerring, vier Auslegernasen und daran angeordneten Auslegerstößeln;
- Fig. 11A: eine Schnittdarstellung eines Anbaumoduls mit einem Auslegerstößel umfassenden und das Sensorelement bildenden Ausleger, wobei zwei Sensoren jeweils als galvanischer Kontakt ausgebildet sind;
- Fig. 11B: eine Schnittdarstellung eines Anbaumoduls mit einem Auslegerstößel umfassenden und das Sensorelement bildenden Ausleger, wobei zwei Sensor jeweils als Fotounterbrecher ausgebildet sind; und
- Fig. 12: eine Schnittdarstellung eines Anbaumoduls mit einem Einleger und einem Ausleger, wobei am Einleger und am Ausleger Sensorelemente angeordnet sind.

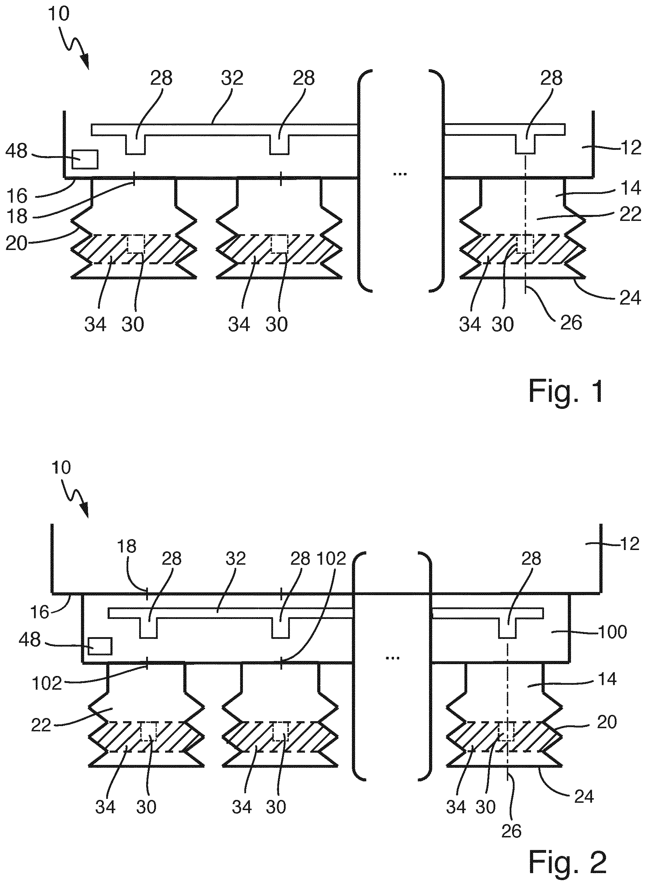

In Fig. 1 ist ein Greifsystem 10 mit einer integrierten Hub- und Belegungssensorik gezeigt. Das Greifsystem 10 umfasst ein Grundmodul 12 und einen am Grundmodul 12 angeordneten Sauggreifer 14. Im Grundmodul 12 ist eine mit Unterdruck beaufschlagbare Unterdruckkammer vorgesehen.

Zudem weist das Grundmodul 12 auf einer zum zu greifenden Objekt hin gerichteten Saugseite 16 mehrere Saugöffnungen 18 auf. An der Saugseite 16 sind jeweils an den Saugöffnungen 18 elastisch komprimierbare Saugnäpfe 20 vorgesehen. Die Saugnäpfe 20 sind als Faltenbalge ausgebildet und bilden jeweils einen Saugraum 22 aus, welcher über die Saugöffnungen 18 mit der in dem Grundmodul 12 vorgesehenen Unterdruckkammer korrespondiert. Am freien Ende des Saugnapfs 20 ist eine Anlagefläche 24 vorgesehen, welche zur Anlage des anzusaugenden Objekts ausgebildet ist und den Saugraum 22 abschließt. Der Saugraum 22 erstreckt sich dabei von der Saugseite 16 bis zur Anlagefläche 24 entlang einer Saugachse 26, welche senkrecht zur Anlagefläche 24 verläuft. Die Hub- und Belegungssensorik umfasst mehrere Sensoren 28 und mehrere im oder am Saugnapf 20 angeordnete Sensorelemente 30. Die integrierte Hub- und Belegungssensorik bedingt die Anordnung der Sensoren 28 im Grundmodul 12. Zudem sind die Sensoren 28 an einer im Grundmodul 12 angeordneten Platine 32 vorgesehen bzw. mit dieser verbunden. In dieser Ausführungsform sind die Sensorelemente 30 an einem Einleger 34 angeordnet. Bei nicht beanspruchten Ausgestaltungen ist es auch denkbar, dass die Sensorelemente 30 alternativ oder zusätzlich an einem nachfolgend beschriebenen Ausleger 50 angeordnet sind.

In Fig. 2 ist eine alternative Ausführungsform gezeigt, wobei gleiche Elemente mit den entsprechend gleichen Bezugszeichen wie in Fig. 1 versehen sind. In Fig. 2 ist ein Greifsystem 10 mit einem Anbaumodul 100 gezeigt. Das Anbaumodul 100 ist zum Nachrüsten eines Greifsystems ohne Hub- und Belegungssensorik vorgesehen. Dabei wird wenigstens ein Anbaumodul 100 zwischen dem Grundmodul 12 und den Sauggreifer 14 angeordnet. Das Anbaumodul 100 sieht Anbauöffnungen 102 vor, welche die Saugöffnungen 18 an der Saugseite 16 des Grundmoduls 12 jeweils mit den Saugräumen 22 der Saugnäpfe 20 verbinden. Folglich korrespondieren die Saugräume 22 über die Saugöffnungen 18 und die Anbauöffnungen 102 mit der in dem Grundmodul 12 vorgesehenen Unterdruckkammer. Das Anbaumodul 100 umfasst mehrere Sensoren 28, welche mit einer Platine 32 verbunden sind. Durch die Anordnung der Sensoren 28 und der Platine 32 im Anbaumodul 100 können folglich beliebige Greifsysteme ertüchtigt werden. Die mit den Sensoren 28 zusammenwirkenden Sensorelemente 30 sind an mehreren Einlegern 34 angeordnet. Auch hier ist es im Rahmen von nicht beanspruchten Ausgestaltungen denkbar, dass die Sensorelemente 30 alternativ oder zusätzlich an mehreren nachfolgend beschriebenen Auslegern 50 angeordnet sind. In der in Fig. 2 gezeigten Ausführungsform ist ein Anbaumodul 100 für mehrere Saugnäpfe 20 vorgesehen.

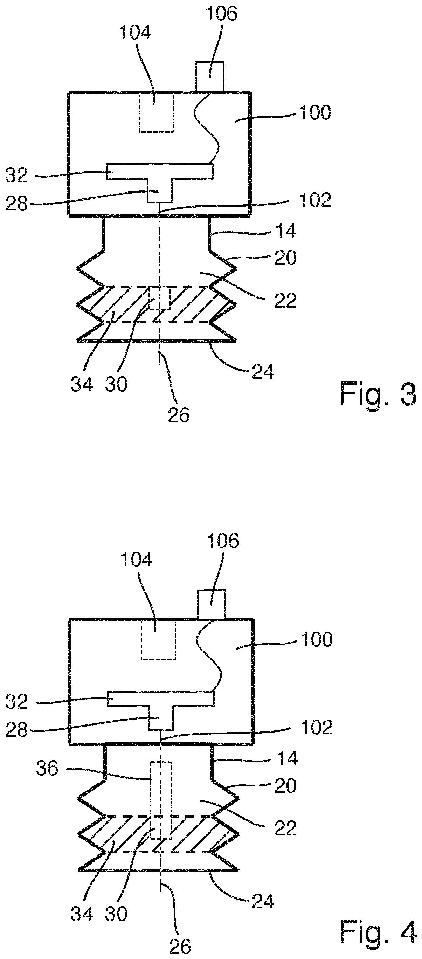

In den in den Figuren 3 bis 12 gezeigten Anbaumodulen 100 ist jeweils ein Anbaumodul 100 für einen Saugnapf 20 vorgesehen. In der weiteren Beschreibung wird auf diese Ausführungsform Bezug genommen, wobei die folgend beschriebenen Merkmale auch auf die in Fig. 1 und Fig. 2 gezeigten Ausführungsformen anwendbar sind.

In Fig. 3 ist ein Anbaumodul 100 gezeigt, wobei ein Sauggreifer 14 am Anbaumodul 100 angeordnet ist. Das Anbaumodul 100 kann an der Saugseite 16 eines Grundmodul 12 angeordnet werden, wobei die Saugöffnungen 18 des Grundmoduls 12 mit der Anbauöffnung 102 des Anbaumoduls derart ausgerichtet sein sollen, dass eine fluidische Verbindung zwischen der Unterdruckkammer und dem Saugraum 22 des Saugnapfs 20 hergestellt ist. Zur Befestigung des Anbaumoduls 100 an der Saugseite 16 des Grundmoduls 12 ist an der dem Sauggreifer 14 abgewandten Seite des Anbaumoduls 100 ein Befestigungsmechanismus 104 vorgesehen. Für die Hub- und Belegungssensorik ist im Anbaumodul 100 ein Sensor 28 und eine Platine 32 vorgesehen, welche mit einem zum Grundmodul 12 gerichteten Stecker 106 verbunden ist. Im Saugraum 22 ist ein Einleger 34 vorgesehen, welcher derart am Saugnapf 20 angeordnet ist, dass der Einleger 34 bei Verlagerung des Saugnapfs 20 ebenfalls verlagert wird.

Die Ausführungsform der Fig. 4 unterscheidet sich von der Fig. 3 hinsichtlich der Ausbildung des Sensorelements 30. In Fig. 4 umfasst der Einleger 34 einen Einlegerstößel 36, wobei der Einlegerstößel 36 das Sensorelement 30 bildet.

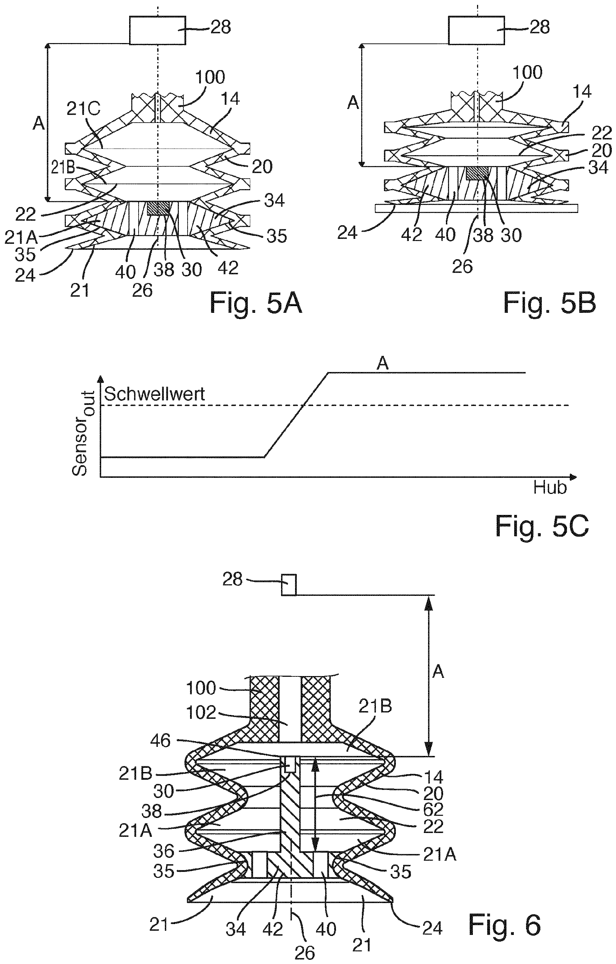

In den Figuren 5A und 5B ist eine Schnittansicht eines Saugnapfs 20 gemäß der in der Fig. 3 gezeigten Ausführungsform dargestellt. In der Fig. 5A ist der Neutralzustand des Saugnapfs 20 gezeigt, wobei im Betrieb kein Objekt an der Anlagefläche 24 des Sauggreifers 14 angesaugt gehalten ist. In der Fig. 5A ist der Komprimierzustand des Saugnapfs 20 gezeigt, wobei im Betrieb ein nicht dargestelltes Objekt an der Anlagefläche 24 des Sauggreifers 14 angesaugt gehalten ist. Die Bewegung des Sauggreifers 14 zwischen dem Neutralzustand und dem Komprimierzustand stellt die Hubbewegung des Sauggreifers 14 dar. Im Saugraum 22 ist ein Einleger 34 angeordnet, welcher die Hubbewegung des Sauggreifers 14 mitmacht. Der Sauggreifer ist als Faltenbalg ausgebildet und umfasst von der Saugachse 26 betrachtet eine im Bereich des zu greifenden Objekts angeordnete Anlagefalte 21 und drei Innenfalten 21A, 21B, 21C, wobei der Einleger 34 an bzw. in der dem zu greifenden Objekt zugewandten ersten Innenfalte 21A angeordnet ist. Der Einleger 34 weist eine radial außenliegende Außenkontur 35 auf, welche mit der Innenkontur des Saugnapfs 20 im Bereich der Innenfalte 21A derart korrespondiert, dass der Einleger 34 im Saugnapf 20, insbesondere formschlüssig und/oder kraftschlüssig, vorzugsweise vorgespannt, gehalten wird. Alternativ kann der Einleger 34 auch in der zweiten Innenfalte 21B oder in der dritten Innenfalte 21C angeordnet sein. Am Einleger 34 ist eine Ausnehmung 38 zur Aufnahme des Sensorelements 30 vorgesehen. Zudem weist der Einleger 34 Luftdurchlasskanäle 40 auf, sodass eine fluidische Verbindung zwischen der im Grundmodul 12 angeordneten Unterdruckkammer und dem zu greifenden Objekt herstellbar ist, insbesondere wenn der Einleger 34 den gesamten Querschnitt des Saugraums 22, wie in den Fig. 1 bis 8 gezeigt, einnimmt. Auch die in den Fig. 1 bis 4 dargestellten Einleger 34 weisen nicht sichtbare Luftdurchlasskanäle 40 auf.

Für die Hub- und Belegungsdetektion wirken das am Einleger 34 angeordnete Sensorelement 30 mit einem im teilweise dargestellten Anbaumodul 100 vorgesehenen Sensor 28 zusammen. Der Sensor 28 und das Sensorelement 30 sind derart eingerichtet, dass kontinuierlich ein Abstand A zwischen dem Sensor 28 und dem Sensorelement 30 detektiert wird. Dies ist insbesondere der Fall, wenn der Sensor 28 als Magnetfeldsensor, insbesondere als Hall-Sensor, optischer, kapazitiver oder induktiver Sensor ausgebildet ist. Aufgrund der Kopplung des Sensorelements 30 über den Einleger 34 mit dem Saugnapf 20 führt die Hubbewegung des Sauggreifers 14 zu einer relativen Verlagerung des Sensorelements 30 hinsichtlich des Sensors 28. Dabei erzeugt der Sensor 28 Sensorsignale, wenn das Sensorelement 30 verlagert wird und/oder der Sauggreifer 14 zumindest einen vorgegebenen oder vorgebbaren Komprimierzustand erreicht. Da der Sensor 28 als mehrachsig wirkender Sensor ausgebildet ist, kann zudem die Position des Sensorelements 30 senkrecht zur Saugachse 26 und dessen Orientierung bestimmt werden. Folglich erzeugt der Sensor 28 ebenfalls Sensorsignal, wenn das Sensorelement 30 in der Ebene senkrecht zur Saugachse 26 verlagert wird und/oder seine Orientierung bspw. aufgrund einer Kippbewegung verändert.

In Fig. 5A ist dargestellt, wie der Abstand A zwischen dem Sensor und dem Sensorelement 30 größer als der Schwellwert ist, sodass der Sauggreifer 14 den Neutralzustand einnimmt. In Fig. 5B ist dargestellt, wie der Abstand A zwischen dem Sensor 28 und dem Sensorelement 30 kleiner als der Schwellwert ist, sodass der Sauggreifer 14 den Komprimierzustand einnimmt. In Fig. 5C ist der Verlauf des Sensorsignals in Abhängigkeit der Hubbewegung gezeigt, wobei das Sensorsignal nach einem bestimmten Hub den Schwellwert überschreitet, was mit einem Annehmen des Komprimierzustands einhergeht. In diesem Fall würde der Sensor ein Sensorsignal ausgeben, sodass ein Rückschluss auf die Hublage und die Belegung des Sauggreifers 14 gezogen werden kann.

Zur Auswertung der Sensorsignale der in Fig. 5A dargestellten Ausführungsform ist eine in Fig. 1 und 2 gezeigte Auswerteeinheit 48 vorgesehen. Dabei können aus den Sensorsignalen verschiedene Größen bestimmt werden. Zu diesen Größen zählt insbesondere der Komprimierzustand und die entlang der Saugachse 26 gerichtete Komprimiertiefe des Saugnapfs 20 sowie die Belegung des Sauggreifers 14. Ferner ist die Auswerteeinheit 48 dazu eingerichtet, die Veränderung der Komprimiertiefe bzw. des Komprimierzustands während der Handhabung zu bestimmen. Folglich ist ein Abrutschen des angesaugten Objekts detektierbar. In der Ausführungsform der Fig. 1 ist die Auswerteeinheit 48 im Grundmodul 12 vorgesehen. Zudem ist die Auswerteeinheit 48 dazu eingerichtet, ein Verkippen des Saugnapfs 20 durch eine Orientierungsänderung des Sensorelements 30 zu detektieren. Dabei kann es bspw. zu einer Winkeländerung relativ zur Saugachse 26 kommen. In der Ausführungsform der Fig. 2 ist die Auswerteeinheit 48 im Anbaumodul 100 vorgesehen. Allerdings ist auch denkbar, dass die Auswerteeinheit 48 extern vorgesehen ist, und insbesondere mit einer übergeordneten Maschinensteuerung gekoppelt ist.

In Fig. 6 ist analog zu den Figuren 5A und 5B ein Sauggreifer 14 gezeigt, wobei ein Einleger 34 eine Einlegerplatte 42 und einen an der Einlegerplatte 42 angeordneten, parallel zur Saugachse 26 nach axial oben hin zum Sensor 28 gerichteten Einlegerstößel 36 umfasst. Der Saugnapf 20 ist als Faltenbalg und von der Saugachse 26 betrachtet mit einer im Bereich des zu greifenden Objekts angeordneten Anlagefalte 21 und zwei Innenfalten 21A, 21B ausgebildet, wobei der Einleger 34 zwischen der Anlagefalte 21 und der Innenfalte 21A angeordnet ist. Der Einleger 34 bzw. die Einlegerplatte 42 weist eine radial außenliegende Außenkontur 35 auf, welche mit der Innenkontur des Saugnapfs 20 im Bereich zwischen der Anlagefalte 21 und der Innenfalte 21A derart korrespondiert, dass der Einleger 34 formschlüssig und/oder kraftschlüssig im Saugnapf 20 gehalten wird. Alternativ kann der Einleger 34, wie in Fig. 5A gezeigt, ebenfalls in einer der Innenfalten 21A, 21B, 21C angeordnet sein oder sich über mindestens eine Innenfalte und eine Außenfalte entlang der Saugachse 26 erstrecken. Ferner kann der in Fig. 5A gezeigte Einleger 34 entsprechend der Fig. 6 in zwischen der Anlagefalte 21 und der Innenfalte 21A oder zwischen zwei Innenfalten 21A, 21B, 21C angeordnet sein. Der Einlegerstößel 36 weist ein der Einlegerplatte 42 abgewandtes freies Stößelende 46 auf. Am freien Stößelende 46 ist eine Ausnehmung 38 vorgesehen, in welche das Sensorelement 30 aufgenommen ist. Durch die räumliche Anordnung des Sensorelements 30 mit einem geringeren Abstand A zum Sensor 28 kann eine höhere Sensibilität der Hub- und Belegungsdetektion erzielt werden.

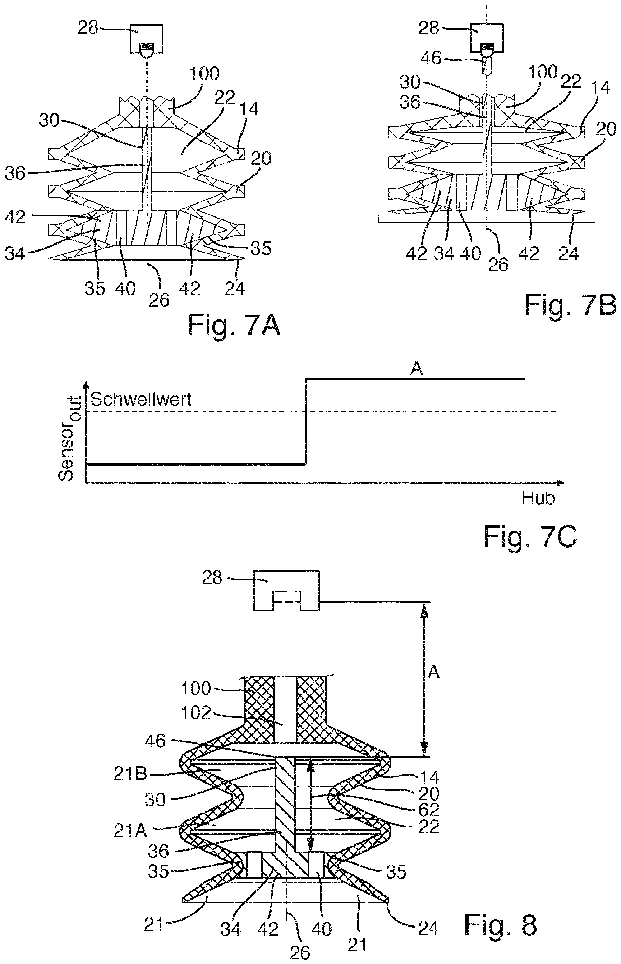

In den Figuren 7A und 7B ist ebenfalls ein Sauggreifer 14 mit einem in der ersten Innenfalte 21A angeordneten Einleger 34 und einem Einlegerstößel 36 gezeigt. Im Gegensatz zum Messprinzip mit einem Magnetfeldsensor, insbesondere Hall-Sensor, kapazitiven, optischen oder induktiven Sensor ist bei dieser Ausführungsform der Einlegerstößel 36 zwingend erforderlich. Der Sensor 28 ist als galvanischer Kontakt ausgebildet, sodass ein Kontakt zwischen dem Sensor 28 und dem Sensorelement 30 notwendig ist. In Fig. 7C ist der Verlauf des Sensorsignals in Abhängigkeit der Hubbewegung gezeigt. Aufgrund des hier zur Verwendung kommenden Messprinzips ist keine kontinuierliche Abstandsmessung zwischen dem Sensor 28 und dem Sensorelement 30 möglich. Folglich wird der Schwellwert dann erreicht und das Sensorsignal erzeugt, wenn das Sensorelement 30 den Sensor 28 kontaktiert.

In Fig. 8 ist ebenfalls ein Sauggreifer 14 gezeigt, wobei der Sensor 28 als Fotounterbrecher ausgebildet ist. Aufgrund des Messprinzips muss das Sensorelement 30 ebenfalls sehr nah an den Sensor 28 bewegt werden, sodass ein Sensorsignal erzeugt werden kann. In dieser Ausführungsform bildet der zwischen der Anlagefalte 21 und der Innenfalte 21A angeordnete Einleger 34, insbesondere der Einlegerstößel 36, den Sensorelement 30. Beim Durchschreiten der Fotoschranke des Sensors 28 durch den Einlegerstößel 36, wird ein Sensorsignal erzeugt, wodurch auf den Komprimierzustand des Sauggreifers 14 geschlossen werden kann.

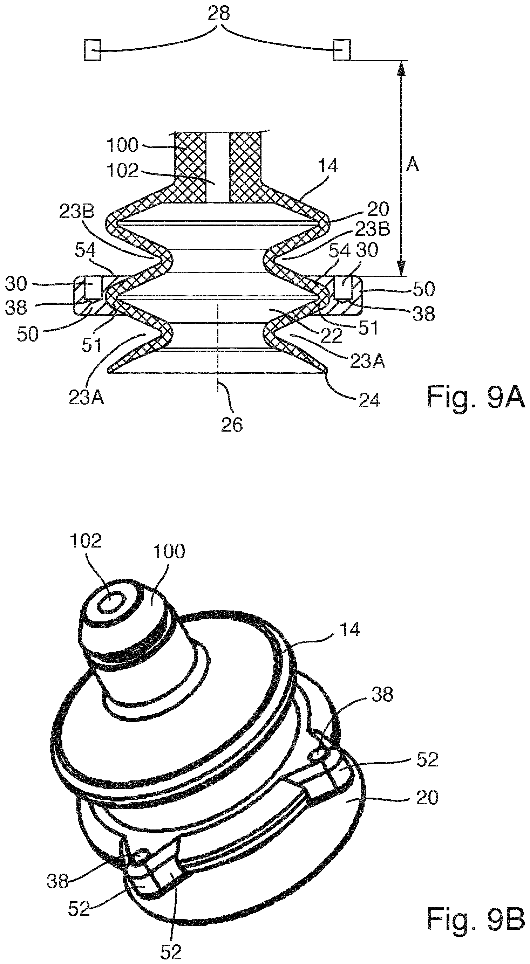

In Fig. 9A und 9B ist ein Sauggreifer 14 mit einem Ausleger 50 gezeigt. Der Saugreifer 14 umfasst einen Saugnapf 20, welcher ebenfalls als Faltenbalg ausgebildet ist. Der Faltenbalg weist von radial außen betrachtet eine ersten Außenfalte 23A und eine zweite Außenfalte 23B auf, wobei die erste Außenfalte 23A zwischen der Anlagefalte 21 und der ersten Innenfalte 21A angeordnet ist und die zweite Außenfalte 23B zwischen der ersten Innenfalte 21A und der zweiten Innenfalte 21B angeordnet ist. Der Ausleger 50 ist ringartig auf der dem Saugraum 22 abgewandten Seite des Saugnapfs 20 zwischen der ersten Außenfalte 23A und der zweiten Außenfalte 23B angeordnet und umschließt folglich den Saugnapf 20 zumindest teilweise im Bereich zwischen der ersten Außenfalte 23A und der zweiten Außenfalte 23B. Der Ausleger 50 weist eine innenliegende, zur Saugachse 26 gerichtete Innenkontur 51 auf, welche mit der Außenkontur des Saugnapfs 20 im Bereich zwischen der Außenfalte 23A und der Außenfalte 23B derart korrespondiert, dass der Einleger 34, insbesondere formschlüssig und/oder kraftschlüssig, vorzugsweise vorgespannt, am Saugnapf 20 gehalten wird.

Alternativ kann der Ausleger 50 an oder in einer Außenfalte 23A, 23B angeordnet sein oder sich über mindestens eine Innenfalte und eine Außenfalte entlang der Saugachse 26 erstrecken. Der Ausleger 50 umfasst ferner vier in radialer Richtung abstehende Auslegernasen 52. Die Auslegernasen 52 sind auf einem Kreis um die Saugachse 26 in einem Winkel von 90° zueinander angeordnet. Es ist ebenfalls denkbar, dass mehrere Sensoren 28, insbesondere 3 oder 5 Sensoren, mit einem Winkel von 120° bzw. 72° zueinander um die Saugachse 26 angeordnet sind. An den Auslegernasen 52 sind jeweils an einer senkrecht zur Saugachse ausgebildeten Auslegerfläche 54 angeordnete Ausnehmungen 38 zur Aufnahme der Sensorelement 30 vorgesehen. Es können auch alternative Befestigungsmöglichkeiten zur Befestigung des Sensorelements 30 vorgesehen sein, z.B. abstehende Aufnahmen. Der Ausleger 50 kann alternativ oder zusätzlich mit dem Saugnapf 20 verklebt, vernäht oder verschweißt werden. Folglich bewegt sich der Ausleger 50 analog zum Einleger 34 bei einer Hubbewegung des Sauggreifers 14. Durch die Kopplung des Sensorelements 30 mit dem Ausleger 50 kann somit der Hub, die Verkippung und die Belegung des Sauggreifers 14 detektiert werden. Diese Ausführungsform ist insbesondere für Sensoren 28 geeignet, welche als Magnetfeldsensor, insbesondere als Hall-Sensoren, kapazitive, optische oder induktive Sensoren ausgebildet sind, da für dieses Messprinzip ein Abstand zwischen dem Sensor 28 und dem Sensorelement 30 möglich ist.

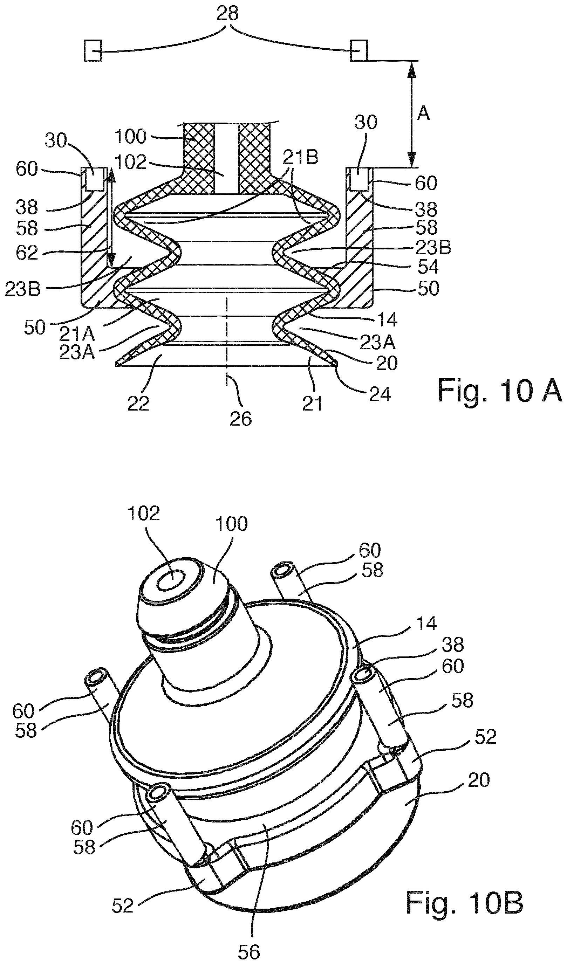

In den Fig. 10A und 10B ist ebenfalls ein Sauggreifer 14 mit einem Ausleger 50 dargestellt. Der Ausleger 50 umfasst einen Auslegerring 56 und vier zu den Sensoren gerichtete, kreisförmig um die Saugachse 26 in einem Winkel von 90° angeordnete Auslegerstößel 58. Die Auslegerstößel 58 sind parallel zur Saugachse 26 ausgebildet und weisen ein dem zu greifenden Objekt abgewandtes freies Auslegerende 60 auf. Am Auslegerende 60 ist jeweils eine Ausnehmung 38 vorgesehen, in welcher das Sensorelement 30 angeordnet werden kann. Der Auslegerring 56 weist eine senkrecht zur Saugachse 26 ausgebildete Auslegerfläche 54 auf. Zur Befestigung des Auslegers 50 kann der Auslegerring 56 über eine Falte des Saugnapfs 20 rüber gestülpt werden, sodass eine formschlüssige Verbindung zwischen dem Ausleger 50 und dem Saugnapf 20 herstellbar ist. Der Auslegerstößel 58 kann, wie der Einlegerstößel 36, parallel zur Saugachse 26 eine Stößelhöhe 62 aufweisen, welche vorzugsweise mindestens der halben Höhe des Saugnapfes 20, also dem Abstand zwischen der Anlagenfläche 24 und dem Übergang zwischen dem Saugnapf 20 und dem Anbaumodul 100, entspricht.

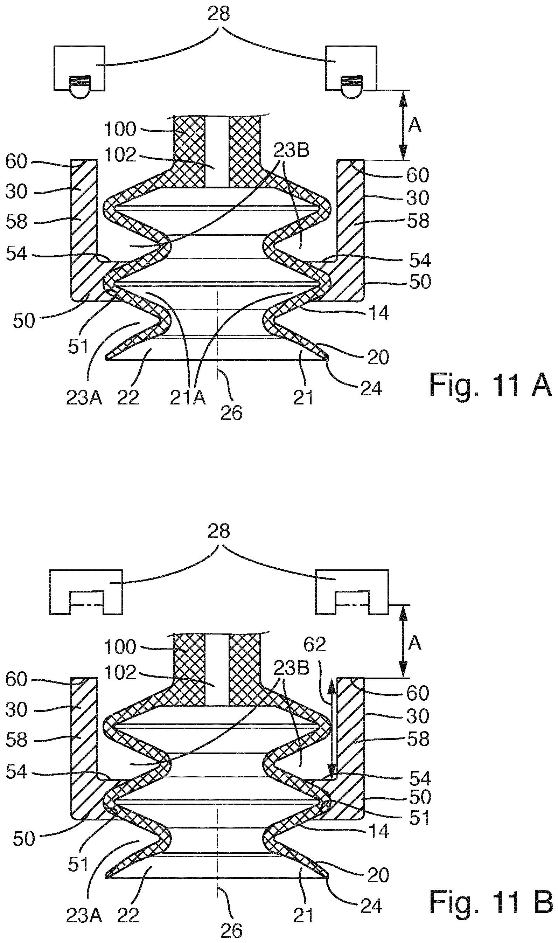

In den Figuren 11A und 11B sind ebenfalls Sauggreifer 14 mit Auslegerstößeln 58 gezeigt. In der Ausführungsform der Fig. 11A ist der Sensor 28 als galvanischer Kontakt ausgebildet und in der Ausführungsform der Fig. 11B ist der Sensor 28 als Fotounterbrecher ausgebildet. Aufgrund der beiden Messprinzipien ist es erforderlich, dass das Sensorelement 30 in die unmittelbare Umgebung des Sensors 28 gebracht wird, damit ein Sensorsignal erzeugt werden kann. Aus diesem Grund benötigen die beiden Messprinzipien die bereits in Fig. 10A und 10B dargestellten Auslegerstößel 58. Allerdings ist am freien Auslegerende 60 keine Ausnehmung zur 38 zur Aufnahme eines separaten Sensorelements 30 erforderlich, da der Auslegerstößel 58 selbst das Sensorelement 30 bildet.

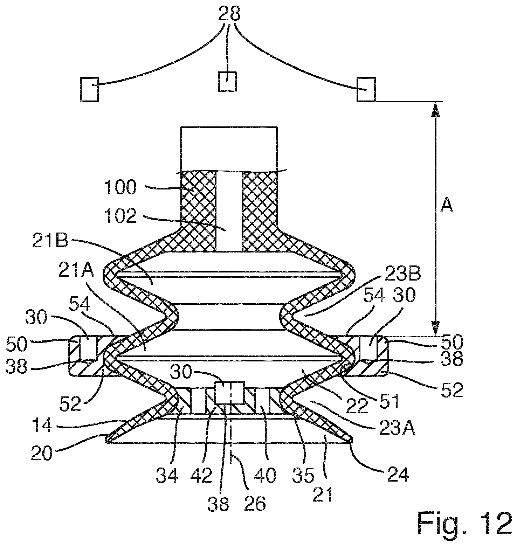

In Fig. 12 ist eine kombinierte Ausführungsform eines Sauggreifers 14 gezeigt, wobei sowohl ein Einleger 34 als auch ein Ausleger 50 am Saugnapf 20 vorgesehen sind. Im Einleger 34 und dem Ausleger 50 sind Ausnehmungen 38 vorgesehen, welche die Sensorelemente 30 aufnehmen. Im Anbaumodul 100 sind mit den Sensorelementen 30 korrespondierende Sensoren 28 vorgesehen, welche eine kontinuierliche Abstandsmessung zwischen dem Sensor 28 und dem Sensorelement 30 ermöglichen, sodass der Hub, die Verkippung und die Belegung des Sauggreifers 14 detektiert werden kann.

## Patentansprüche

1. Greifsystem (10) mit einem Grundmodul (12), in welchem eine mit Unterdruck beaufschlagbare Unterdruckkammer vorgesehen ist, und mit einem am Grundmodul (12) angeordneten Sauggreifer (14) zum Ansaugen und Handhaben von Objekten, wobei das Grundmodul (12) auf einer Saugseite (16) wenigstens eine Saugöffnung (18) aufweist, wobei der Saugseite (16) elastisch komprimierbare, mit den Saugöffnungen (18) korrespondierende, Saugräume (22) aufweisende Saugnäpfe (20) mit einer Anlagefläche (24) zur Anlage des anzusaugenden Objekts zugeordnet sind, wobei sich die Saugräume (22) jeweils entlang einer senkrecht zur Anlagefläche (24) orientierten Saugachse (26) erstrecken, wobei im Betrieb, in welchem an der Anlagefläche (24) keine Objekte angesaugt gehalten sind, die Saugnäpfe (20) einen Neutralzustand einnehmen, und wobei im Betrieb, in welchem an der Anlagefläche (24) ein Objekt angesaugt gehalten ist, die Saugnäpfe (20) einen Komprimierzustand einnehmen, wobei am oder im Grundmodul (12) wenigstens ein Sensor (28) und am oder im wenigstens einem Saugnapf (20) wenigstens ein Sensorelement (30) vorgesehen sind, wobei das wenigstens eine Sensorelement (30) an einem im Saugraum (22) angeordneten Einleger (34) angeordnet oder vom Einleger (34) gebildet ist,
wobei der wenigstens eine Sensor (28) und das wenigstens eine Sensorelement (30) derart zusammenwirken und eingerichtet sind, dass durch Verlagerung des wenigstens einen Sensorelements (30) und zumindest bei Erreichen des vorgegebenen oder vorgebbaren Komprimierzustands von dem wenigstens einen Sensor (28) Sensorsignale erzeugt werden, **dadurch gekennzeichnet, dass** eine die Sensorsignale auswertende Auswerteeinheit (48) vorgesehen ist, die dazu eingerichtet ist, aus den Sensorsignalen eine oder mehrere der folgenden Größen zu bestimmen:
- die Komprimiertiefe beim Ansaugen von Objekten,
- einen Abstand des Sensorelements (30) zur Saugachse (26) und/oder dessen Winkel zur Saugachse (26),
- die Veränderung des Komprimierzustands während der Handhabung der Objekte,
- ein Verkippen des Saugnapfs (20) durch eine Orientierungsänderung des Sensorelements (30).

2. Greifsystem (10) nach Anspruch 1, **dadurch gekennzeichnet, dass** der Einleger (34) eine senkrecht zur Saugachse (26) ausgebildete Einlegerplatte (42) und wenigstens eine in der Einlegerplatte (42) vorgesehene Aufnahme (38), insbesondere Ausnehmung, aufweist, in der das wenigstens eine Sensorelement (30) angeordnet ist.

3. Greifsystem (10) nach Anspruch 2, **dadurch gekennzeichnet, dass** die Ausnehmung (38) im Bereich der Saugachse (26) vorgesehen ist.

4. Greifsystem (10) nach Anspruch 1, 2 oder 3, **dadurch gekennzeichnet, dass** der Einleger (34) wenigstens einen an der Einlegerplatte (42) angeordneten und zum Sensor (28) gerichteten Einlegerstößel (36) mit einem freien Stößelende (46) umfasst, wobei das wenigstens eine Sensorelement (30) durch das freie Stößelende (46) gebildet wird oder am Einlegerstößel (36) vorgesehen ist.

5. Greifsystem (10) nach Anspruch 4, **dadurch gekennzeichnet, dass** sich der wenigstens eine Einlegerstößel (36) parallel zur Saugachse (26) erstreckt.

6. Greifsystem (10) nach einem der vorhergehenden Ansprüche, **dadurch gekennzeichnet, dass** das wenigstens eine Sensorelement (30) einen Magneten, ein ferromagnetisches Metall und/oder ein durch den wenigstens einen Sensor (28) detektierbares Material umfasst.

7. Greifsystem (10) nach einem der vorhergehenden Ansprüche, **dadurch gekennzeichnet,**
**dass** der wenigstens eine Sensor (28) als kapazitiver Sensor, als induktiver Sensor, als optischer Sensor und/oder als Magnetfeldsensor, insbesondere als Hall-Sensor, ausgebildet ist, und/oder
**dass** der wenigstens eine Sensor (28) und das wenigstens eine Sensorelement (30) als Fotounterbrecher und/oder als galvanischer Kontakt ausgebildet sind.

## Claims

1. Gripping system (10) comprising a base module (12), in which a vacuum chamber is provided which can be subjected to a vacuum, and comprising a suction gripper (14) arranged on the base module (12) for sucking up and handling objects, wherein the base module (12) has at least one suction opening (18) on a suction side (16), wherein resiliently compressible suction cups (20) corresponding to the suction openings (18) and having suction chambers (22) and a contact surface (24) for contacting the object to be sucked up are assigned to the suction side (16), wherein the suction chambers (22) each extend along a suction axis (26) oriented perpendicularly to the contact surface (24), wherein, in an operation in which no objects are held by suction on the contact surface (24), the suction cups (20) assume a neutral state, and wherein, in an operation in which an object is held by suction on the contact surface (24), the suction cups (20) assume a compression state, wherein at least one sensor (28) is provided on or in the base module (12) and at least one sensor element (30) is provided on or in at least one suction cup (20), wherein the at least one sensor element (30) is arranged on an insert (34) arranged in the suction chamber (22) or is formed by the insert (34),
wherein the at least one sensor (28) and the at least one sensor element (30) interact and are designed such that sensor signals are generated by the at least one sensor (28) by displacement of the at least one sensor element (30) and at least when the predetermined or predeterminable compression state is reached, **characterized in that** an evaluation unit (48) is provided which evaluates the sensor signals and is designed to determine one or more of the following variables from the sensor signals:
- the compression depth when sucking up objects,
- a distance of the sensor element (30) from the suction axis (26) and/or its angle with respect to the suction axis (26),
- the change of the compression state during handling of the objects,
- a tilting of the suction cup (20) due to a change in orientation of the sensor element (30).

2. Gripping system (10) according to claim 1, **characterized in that** the insert (34) has an insert plate (42) formed perpendicularly to the suction axis (26) and at least one receptacle (38), in particular a recess, provided in the insert plate (42), in which the at least one sensor element (30) is arranged.

3. Gripping system (10) according to claim 2, **characterized in that** the recess (38) is provided in the region of the suction axis (26).

4. Gripping system (10) according to claim 1, 2 or 3, **characterized in that** the insert (34) comprises at least one insert tappet (36) arranged on the insert plate (42) and directed towards the sensor (28) and having a free tappet end (46), wherein the at least one sensor element (30) is formed by the free tappet end (46) or is provided on the insert tappet (36).

5. Gripping system (10) according to claim 4, **characterized in that** the at least one insert tappet (36) extends in parallel with the suction axis (26).

6. Gripping system (10) according to any one of the preceding claims, **characterized in that** the at least one sensor element (30) comprises a magnet, a ferromagnetic metal and/or a material that can be detected by the at least one sensor (28).

7. Gripping system (10) according to any one of the preceding claims, **characterized in that**
the at least one sensor (28) is designed as a capacitive sensor, as an inductive sensor, as an optical sensor and/or as a magnetic field sensor, in particular as a Hall sensor, and/or
**in that** the at least one sensor (28) and the at least one sensor element (30) are designed as a photo interrupter and/or as a galvanic contact.

## Revendications

1. Système de préhension (10) avec un module de base (12), dans lequel est prévue une chambre à dépression pouvant être soumise à une dépression, et avec une pince d'aspiration (14) disposée sur le module de base (12) pour aspirer et manipuler des objets, dans lequel le module de base (12) présente sur un côté d'aspiration (16) au moins une ouverture d'aspiration (18), dans lequel des ventouses (20) pouvant être comprimées élastiquement, correspondant aux ouvertures d'aspiration (18), présentant des espaces d'aspiration (22) avec une surface d'appui (24) pour l'appui de l'objet à aspirer, sont associées au côté d'aspiration (16), dans lequel les espaces d'aspiration (22) s'étendent respectivement le long d'un axe d'aspiration (26) orienté perpendiculairement à la surface d'appui (24), dans lequel lors d'un fonctionnement dans lequel aucun objet n'est maintenu par aspiration sur la surface d'appui (24), les ventouses (20) prennent un état neutre, et dans lequel lors d'un fonctionnement dans lequel un objet est maintenu par aspiration sur la surface d'appui (24), les ventouses (20) prennent un état de compression, dans lequel au moins un capteur (28) est prévu sur ou dans le module de base (12) et au moins un élément de capteur (30) sur ou dans au moins une ventouse (20), dans lequel le au moins un élément de capteur (30) est disposé sur un insert (34) disposé dans l'espace d'aspiration (22) ou est formé par l'insert (34), dans lequel le au moins un capteur (28) et le au moins un élément de capteur (30) coopèrent et sont conçus de telle sorte que par déplacement du au moins un élément de capteur (30) et au moins lorsque l'état de compression prédéfini ou pouvant être prédéfini est atteint, des signaux de capteur sont produits par le au moins un capteur (28), **caractérisé en ce qu'**une unité d'évaluation (48) évaluant les signaux de capteur est prévue, qui est conçue pour déterminer une ou plusieurs des grandeurs suivantes à partir des signaux de capteur :
- la profondeur de compression lors de l'aspiration d'objets,
- une distance de l'élément de capteur (30) par rapport à l'axe d'aspiration (26) et/ou son angle par rapport à l'axe d'aspiration (26),
- la modification de l'état de compression pendant la manipulation des objets,
- un basculement de la ventouse (20) dû à un changement d'orientation de l'élément de capteur (30).

2. Système de préhension (10) selon la revendication 1, **caractérisé en ce que** l'insert (34) présente une plaque d'insert (42) réalisée perpendiculairement à l'axe d'aspiration (26) et au moins un logement (38), en particulier évidement, prévu dans la plaque d'insert (42), dans lequel est disposé le au moins un élément de capteur (30).

3. Système de préhension (10) selon la revendication 2, **caractérisé en ce que** l'évidement (38) est prévu dans la zone de l'axe d'aspiration (26).

4. Système de préhension (10) selon la revendication 1, 2 ou 3, **caractérisé en ce que** l'insert (34) comprend au moins un poussoir d'insert (36) disposé sur la plaque d'insert (42) et orienté vers le capteur (28) avec une extrémité de poussoir libre (46), dans lequel le au moins un élément de capteur (30) est formé par l'extrémité de poussoir libre (46) ou est prévu sur le poussoir d'insert (36).

5. Système de préhension (10) selon la revendication 4, **caractérisé en ce que** le au moins un poussoir d'insert (36) s'étend parallèlement à l'axe d'aspiration (26).

6. Système de préhension (10) selon l'une quelconque des revendications précédentes, **caractérisé en ce que** le au moins un élément de capteur (30) comprend un aimant, un métal ferromagnétique et/ou un matériau détectable par le au moins un capteur (28).

7. Système de préhension (10) selon l'une quelconque des revendications précédentes, **caractérisé en ce que** le au moins un capteur (28) est réalisé sous forme de capteur capacitif, de capteur inductif, de capteur optique et/ou de capteur de champ magnétique, en particulier de capteur à effet Hall, et/ou le au moins un capteur (28) et le au moins un élément de capteur (30) sont réalisés sous forme de photo rupteur et/ou de contact galvanique.
